# EUROPÄISCHE PATENTSCHRIFT

(11) **EP 0 626 289 B1**
(45) Veröffentlichungstag und Bekanntmachung des Hinweises auf die Patenterteilung: **09.10.1996**
(21) Anmeldenummer: 94107913.9
(22) Anmeldetag: 21.05.1994
(51) Int. Cl.: B60N 2/30

(54) **Fahrgastsitz mit integriertem Kindersitz**
Passenger seat with integrated children's seat
Siège de passager à siège d'enfant intégré

(30) Priorität: 28.05.1993 DE 4317803
(43) Veröffentlichungstag der Anmeldung: 30.11.1994
(73) Patentinhaber: GRAMMER AG, D-92224 Amberg (DE)
(72) Erfinder: Meiller, Hermann, D-92224 Amberg (DE); Meyer, Thomas, D-92224 Amberg (DE)
(74) Vertreter: Segeth, Wolfgang

(56) Entgegenhaltungen:
- EP-A- 0 258 194
- WO-A-92/03306
- DE-U- 7 916 857
- GB-A- 2 167 949
- GB-A- 2 232 582
- US-A- 4 900 086

## Beschreibung

Die Erfindung betrifft einen Fahrgastsitz mit intergriertem Kindersitz gemäß dem Oberbegriff des Anspruchs 1.

Ein Fahrgastsitz mit integriertem Kindersitz ist aus der DE 79 16 857 U1 bekannt. Bei diesem bekannten Fahrgastsitz ist der erste Polsterkörper in einer oberen und in einer unteren Führungsschiene linear beweglich geführt. Das bedeutet, daß der erste Polsterkörper nicht durch eine Verschwenkung um eine obere Drehachse zwischen der Erwachsenensitzposition und der Kindersitzposition verstellbar ist, sondern durch ein im Vergleich hierzu komplizieretes gleichmäßiges Herausziehen, wobei Verkantungen bzw. Klemmungen nicht zuverlässig vermieden werden können. Insbes. für Mütter kann das problematisch sein.

Ein Fahrgastsitz mit integriertem Kindersitz der eingangs genannten Art ist aus der US-A 4 900 086 bekannt. Dort ergibt sich nach dem Herausklappen des Kindersitzes im Fahrgastsitz eine Vertiefung, die als störend empfunden werden kann.

Aus der GB-A 2 167 949 ist ein Fahrgastsitz mit integriertem Kindersitz bekannt, bei dem die Handhabung zur Verstellung des Kindersitzes zwischen der Kindersitzposition und der Ruheposition, d. h. der Erwachsenensitzposition des Sitzes, Wünsche offen lassen kann.

Der Erfindung liegt die Aufgabe zugrunde, einen Fahrgastsitz der eingangs genannten Art derart auszubilden, daß der erste Polsterkörper zumindest in seinem oberen Bereich nach dem Aufklappen des zweiten Polsterkörpers ebenfalls in der ursprünglichen Rückenlehnenfläche zu liegen kommt, d.h. ein abstufungsloser Übergang zu der eventuell vorhandenen Kopfstütze gegeben ist.

Diese Aufgabe wird erfindungsgemäß durch die Merkmale des Kennzeichenteiles des Anspruchs 1 gelöst. Aus- und Weiterbildungen des erfindungsgemäßen Sitzes sind in den Unteransprüchen gekennzeichnet.

Durch die erfindungsgemäße Ausbildung ist eine Verlagerung des ersten Polsterkörpers in seinem oberen Bereich beim Aufklappen des zweiten Polsterkörpers zur zumindest annähernden, stufenlosen Herstellung der urprünglichen Rückenlehnenfläche problemlos möglich. Die Verschwenkung ist dann zweckmäßigerweise derart, daß sich ein stufenloser Übergang bspw. zu dem dritten Polsterkörper ergibt. Anstelle einer Verschwenkung kann auch eine lineare Verschiebung des ersten Polsterkörpers in seinem oberen Bereich zum Ausgleich der Abstufung durchgeführt werden. Desgleichen können Verschwenkungen und lineare Verschiebungen kombiniert sein. Das ist durch die erfindungsgemäße Ausbildung, d.h. dadurch möglich, daß die Drehachse in am Rückenlehnenträger vorgesehenen Führungen verschiebbar ist.

Ein Band o.dgl. kann am ersten und am zweiten Polsterkörper derart befestigt sein, daß beim Aufklappen des zweiten Polsterkörpers der erste Polsterkörper ebenfalls automatisch verschwenkt wird.

Durch die erfindungsgemäße Ausbildung des Fahrgastsitzes ergibt sich der Vorteil, daß der zweite Polsterkörper nur um die untere Drehachse umgeklappt zu werden braucht, was einfach und kraftsparend möglich ist, um gleichzeitig eine Vorverlagerung des ersten Polsterkörpers zu bewirken, der dann mit der Rückenlehne des Fahrgatsitzes bündig abschließt.

Eine Mitnahme des ersten Polsterkörpers beim Aufklappen des zweiten Polsterkörpers kann nach Art eines sog. Viergelenkgetreibes erfolgen, indem die im unteren Bereich der Rückenlehne verlaufende Drehachse des zweiten Polsterkörpers am ersten Polsterkörper fixiert ist und ein über die Drehachse zum Rückenlehnenträger hin überstehendes Ende des zweiten Polsterkörpers längs des Rückenlehnenträgers in einer Längsrichtung geführt ist.

Die Längsführung kann hierbei einen oder mehrere querlaufende Führungsabschnitte aufweisen, so daß eine oder mehrere genau definierte Stellungen des zweiten Polsterkörpers möglich sind.

Befindet sich die im unteren Bereich der Rückenlehne verlaufende Drehachse des zweiten Polsterkörpers in einem Abstand vom unteren Rand des Rückenlehnenträgers, so kann das auf dem Kindersitz platznehmende Kind seine Füße auf dem darunter befindlichen Sitzpolster des Fahrgastsitzes - zweckmäßigerweise nach einem geeigneten Schutz desselben - abstützen.

Befindet sich die Drehachse des zweiten Polsterkörpers in einem Abstand vom unteren Rand des Rückenlehnenträgers, so besteht Platz dafür, daß das vordere Ende des zweiten Polsterkörpers im aufgeklappten Zustand des zweiten Polsterkörpers bei Gebrauch des Kindersitzes nach unten klappbar ist, wodurch die Tiefe der Sitzfläche für den Kindersitz kürzer gemacht werden kann, als der zweite Polsterkörper lang ist.

Zweckmäßigerweise weist das Lehnenmittelpolster zwischen den beiden Seitenpolstern im Bereich des oberen Randes des Rückenlehnenträgers einen dritten, mit dem Rückenlehnenträger fest verbundenen Polsterkörper auf, der mit dem ersten Polsterkörper bei aufgeklapptem zweiten Polsterkörper für den Gebrauch des Kindersitzes einen stufenlosen Übergang bildet.
In bzw. hinter dem dritten Polsterkörper kann sich dann eine Halterung für die Kopfstütze befinden.

Die zwei Seitenpolster des Rückenlehnenpolsters des Fahrgastsitzes können starr mit dem ersten Polsterkörper verbunden sein, so daß die zwei Seitenpolster zusammen mit dem ersten Polsterkörper beim Aufklappen des zweiten Polsterkörpers für dem Gebrauch des Kindersitzes bewegt werden, oder die zwei Seitenpolster sind gemäß einer alternativen Ausführungsform starr mit dem Rückenlehnenträger verbunden, so daß nur der erste Polsterkörper zwischen den zwei Seitenpolstern beim Aufklappen des zweiten Polsterkörpers für den Gebrauch des Kindersitzes bewegt wird.

Die erfindungsgemäße Ausbildung gestattet es, stufenlose Übergänge, bspw. zu einer Kopfstütze, auch nach dem Aufklappen des zweiten Polsterkörpers im oberen Bereich des Rückenlehnenpolsters sicherzustellen.

Weitere Einzelheiten, Merkmale und Vorteile ergeben sich aus der nachfolgenden Beschreibung von Ausführungsbeispielen des erfindungsgemäßen Fahrgastsitzes, wobei jeweils die Rückenlehne des Fahrgastsitzes mit einer Kopfstütze dargestellt ist, während die Sitzplatte des jeweiligen Fahrgastsitzes nur abschnittweise angedeutet ist. Es zeigen:
- Fig. 1: teilweise aufgeschnitten eine erste Ausführungsform des Fahrgastsitzes in der eingeklappten Stellung des integrierten Kindersitzes,
- Fig. 2: den Fahrgastsitz gemäß Fig. 1 in der ausgeklappten, d.h. aktiven Position des integrierten Kindersitzes,
- Fig. 3: eine der Fig. 1 ähnliche teilweise aufgeschnittene Ansicht einer zweiten Ausbildung des Fahrgastsitzes mit eingeklapptem, nicht in der aktiven Stellung befindlichem integriertem Kindersitz,
- Fig. 4: den Fahrgastsitz gemäß Fig. 3 in der aufgeklappten aktiven Stellung des integrierten Kindersitzes,
- Fig. 5: teilweise aufgeschnitten eine dritte Ausführungsform des Fahrgastsitzes mit in der inaktiven, nicht ausgeklappten Stellung befindlichem integriertem Kindersitz, und
- Fig. 6: den Fahrgastsitz gemäß Fig. 5 in der aufgeklappten aktiven Position des integrierten Kindersitzes.

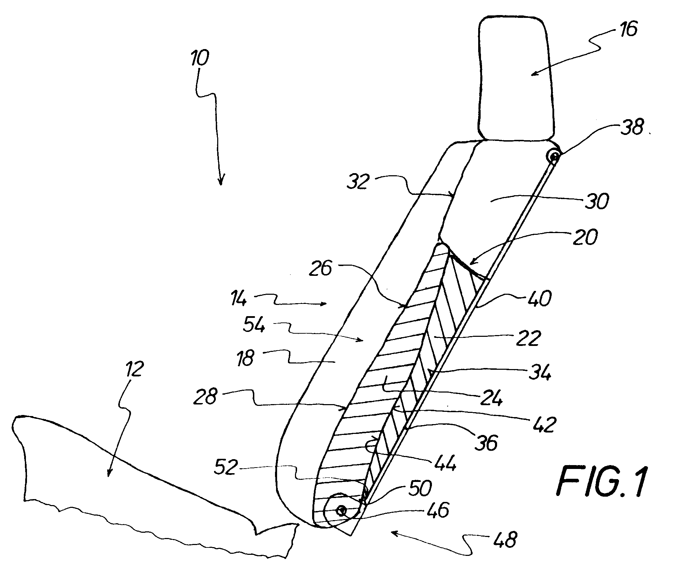

Fig. 1 zeigt in einer Seitenansicht teilweise aufgeschnitten eine Ausbildung des Fahrgastsitzes 10 mit einer abschnittweise gezeichneten Sitzplatte 12 und mit einer Rückenlehne 14, die oberseitig eine Kopfstütze 16 aufweist. Die Rückenlehne 14 weist zwei voneinander beabstandete Seitenpolster 18 auf, zwischen welchen ein Lehnenmittelpolster 20 vorgesehen ist. Das Lehnenmittelpolster 20 weist einen ersten Polsterkörper 22 und einen zweiten Polsterkörper 24 auf. In der in Fig. 1 gezeichneten Normalstellung des Fahrgastsitzes 10 bildet die vom ersten Polsterkörper 22 abgewandte Stirnfläche 26 des zweiten Polsterkörpers 24 einen entsprechenden Abschnitt der Rückenlehnenfläche 28 der Rückenlehne 14 bzw. des Rückenlehnenpolsters der Rückenlehne 14.

Bei der in Fig. 1 gezeichneten Ausbildung des Fahrgastsitzes 10 ist im oberen Bereich der Rückenlehne 14 zwischen den beiden Seitenpolstern 18 ein dritter Polsterkörper 30 vorgesehen, dessen vorderseitige Stirnfläche 32 in der in Fig. 1 gezeichneten Stellung des Fahrgastsitzes 10 mit der Stirnfläche 26 des zweiten Polsterkörpers 24 gleichsam stufen- bzw. absatzlos die erwähnte Rückenlehnenfläche 28 der Rückenlehne 14 bildet.

Der erste Polsterkörper 22 ist mit seiner Rückenfläche 34 an einem formstabilen Element 36 festgelegt, das mittels einer im oberen Bereich der Rückenlehne 14 vorgesehenen Drehachse 38 mit einem Rückenlehnenträger 40 schwenkbeweglich verbunden ist. Der dritte Polsterkörper 30 ist am besagten Rückenlehnenträger 40 festgelegt.

Die von der Rückenfläche 34 abgewandte Vorderfläche 42 des ersten Polsterkörpers 22 ist mindestens annähernd an die von der Stirnfläche 26 abgewandte Oberfläche 44 des zweiten Polsterkörpers 24 angepaßt. Der zweite Polsterkörper 24 ist mittels einer im unteren Bereich 48 der Rückenlehne 14 vorgesehenen Drehachse 46 mit dem Rückenlehnenträger 40 schwenkbeweglich verbunden. Der zweite Polsterkörper 24 ist in der Nachbarschaft der zuletzt erwähnten Drehachse 46 mittels eines flexiblen Verbindungselementes 50 mit dem von der Drehachse 38 entfernten Endabschnitt 52 des ersten Polsterkörpers 22 verbunden.

Der erste Polsterkörper 22 und der zweite Polsterkörper 24 des Lehnenmittelpolsters 20 bilden einen integrierten Kindersitz 54 des Fahrgastsitzes 10.

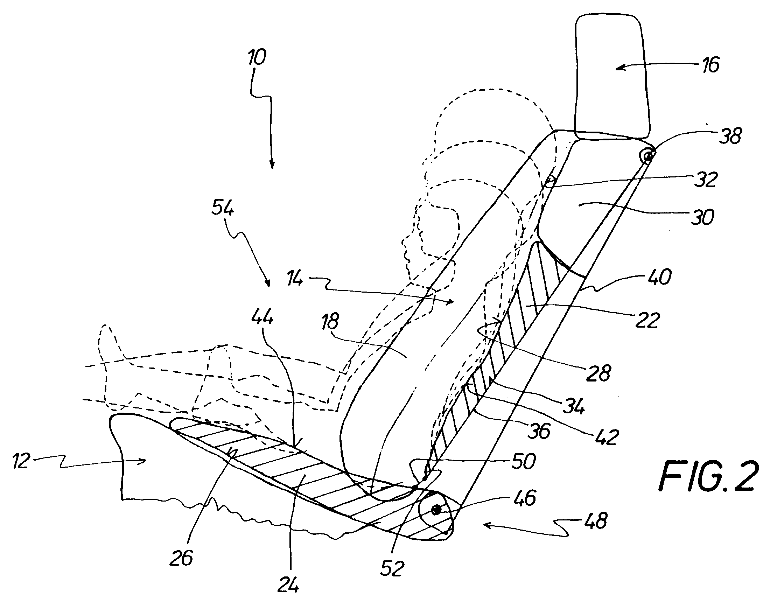

Fig. 2 zeigt den Fahrgastsitz 10 gemäß Fig. 1 in der Stellung, in welcher der integrierte Kindersitz 54 aus der Rückenlehne 14 herausgeklappt ist, wobei also der zweite Polsterkörper 24 um die Drehachse 46 im entgegengesetzten Uhrzeigersinn verschwenkt ist, bis der zweite Polsterkörper 24 mit seiner Stirnfläche 26 auf der Sitzplatte 12 aufliegt. Bei dieser Verschwenkung des zweiten Polsterkörpers 24 wird der erste Polsterkörper 22 durch seine mittels des flexiblen Verbindungselementes 50 gegebenen Verbindung mit dem zweiten Polsterkörper 24 um die zugehörige Drehachse 38 im Uhrzeigersinn derartig verschwenkt, daß in dieser kindersitzaktiven Position des Fahrgastsitzes 10 nun die Vorderfläche 42 des ersten Polsterkörpers 22 mindestens näherungsweise mit der Stirnfläche 32 des dritten Polsterkörpers 30 eine gemeinsame Rückenlehnenfläche 28 bildet. Das bedeutet jedoch, daß auf dem solchermaßen aufgeklappten Fahrgastsitz 10 unterschiedlich große Kinder, d.h. Kinder der verschiedenen Gewichtsklassen anatomisch angepaßt Platz nehmen können, was durch die strichliert angedeuteten Profile dreier verschieden großer Kinder angedeutet ist.

Das flexible Verbindungselement 50 ist zweckmäßigerweise nicht direkt am ersten Polsterkörper 22 befestigt, sondern am Element 36, das zweckmäßigerweise wie der Rückenlehnenträger 40 aus einem Blechmaterial besteht und somit eine ausgezeichnete mechanische Festigkeit besitzt, um zwischen dem ersten Polsterkörper 22, der am Element 36 befestigt ist, und dem zweiten Polsterkörper 22 mittels des flexiblen Verbindungselementes 50 die entsprechende Wirkverbindung herzustellen.

Bei der Ausbildung gemäß den Figuren 1 und 2 des Fahrgastsitzes 10 sind die beiden Seitenpolster 18 wie der erste Polsterkörper 22 am Element 36 festgelegt, so daß beim Aufklappen des integrierten Kindersitzes 54 nicht nur der erste Polsterkörper 22 passend vorverlagert wird, um wiederum die Rückenlehnenfläche 28 festzulegen, sondern gleichzeitig auch die beiden Seitenpolster 18 entsprechend vorverlagert werden, wie sich aus einem Vergleich der Fig. 2 mit der Fig. 1 ergibt. In Fig. 2 sind gleiche Einzelheiten mit denselben Bezugsziffern bezeichnet wie in Fig. 1, so daß es sich erübrigt, auf alle diese Einzelheiten noch einmal detailliert einzugehen.

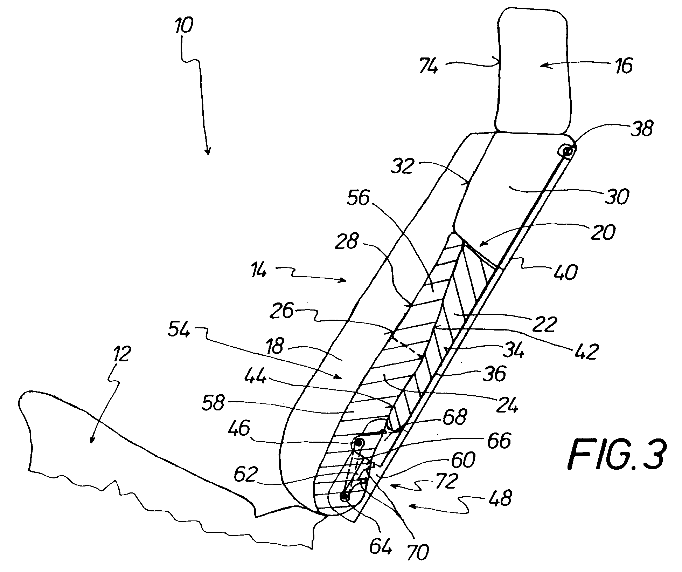

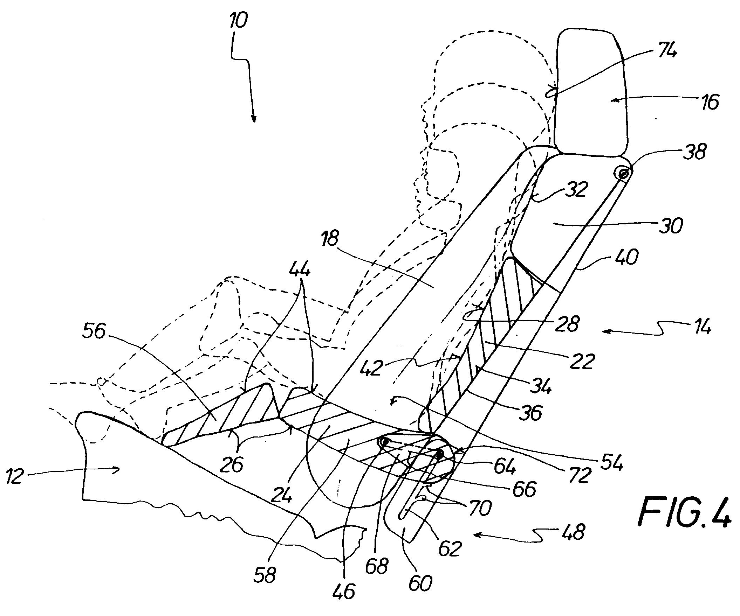

Fig. 3 zeigt eine zweite Ausbildung des Fahrgastsitzes 10 mit einer abschnittweise angedeuteten Sitzplatte 12 und einer Rückenlehne 14 die oberseitig mit einer Kopfstütze 16 versehen ist. Die Rückenlehne 14 weist ein Rückenlehnenpolster mit Seitenpolstern 18, einen zwischen den Seitenpolstern 18 befindlichen Lehnenmittelpolster 20 sowie einen zwischen den Seitenpolstern 18 vorgesehenen dritten Polsterkörper 30 auf, an den oberseitig die Kopfstütze 18 angrenzt. Das Lehnenmittelpolster 20 weist auch bei dieser Ausführungsform des Fahrgastsitzes 10 einen ersten Polsterkörper 22 und einen zweiten Polsterkörper 24 auf, wobei der zweite Polsterkörper 24 einen vorderen Polsterabschnitt 56 und einen rückwärtigen Polsterabschnitt 58 umfaßt. Der vordere Polsterabschnitt 56 ist in bezug auf den rückwärtigen Polsterabschnitt 58 des zweiten Polsterkörpers 24 umklappbar, wie aus Fig. 4 ersichtlich ist, in welcher gleiche Einzelheiten mit denselben Bezugsziffern wie in Fig. 3.

Der zweite Polsterkörper 22 ist auch bei der Ausbildung des Fahrgastsitzes 10 gemäß den Figuren 3 und 4 mit seiner Rückenfläche 34 an einem formstabilen Element 36 festgelegt. Das Element 36 ist mit dem Rückenlehnenträger 40 der Rückenlehne 14 mittels einer Drehachse 38 schwenkbeweglich verbunden. Die besagte Drehachse 38 befindet sich auch bei dieser Ausbildung am oberen Abschnitt der Rückenlehne 14, d.h. in der Nachbarschaft der Kopfstütze 16. Im unteren Bereich 48 der Rückenlehne 14 bzw. im unteren Bereich des Rückenlehnenträgers 40 ist mindestens eine Längsführung 60 mit einem Führungsschlitz 62 vorgesehen. In den entsprechenden Führungsschlitz 62 der mindestens einen Längsführung 60 greift ein Führungsorgan 64 ein, das mittels eines formstabilen Verbindungsorgans 66 mit der im unteren Bereich 48 der Rückenlehne 14 vorgesehenen Drehachse 46 mechanisch verbunden ist, so daß nicht nur die besagte Drehachse 46 sondern auch das mindestens eine Führungsorgan 64 Teil des zweiten Polsterkörpers 24 ist. Die besagte Drehachse 46 ist außerdem mittels mindestens einer Verbindungslasche 68 mit den Element 36 verbunden.

Der Führungsschlitz 62 der/jeder Längsführung 60 des Rückenlehnenträgers 40 kann mit voneinander beabstandeten Führungsabschnitten 70 ausgebildet sein, wobei das zugehörige Führungsorgan 64 jeweils in einen solchen Führungsabschnitt 70 definiert einrasten kann, um eine gewünschte, genau definierte, Winkelstellung des integrierten Kindersitzes in der entsprechenden aufgeklappten Position zu erzielen. In Fig. 4 ist eine solche aufgeklappte Position des integrierten Kindersitzes 54 gezeichnet.

Während in der in Fig. 3 gezeichneten nicht aktiven, d.h. nicht aufgeklappten Stellung des integrierten Kindersitzes 54 die Stirnfläche 26 des aus dem vorderen Polsterabschnitts 56 und dem rückwärtigen Polsterabschnitt 58 zusammengesetzten zweiten Polsterkörpers 24 den entsprechenden Flächenabschnitt der Rückenlehnenfläche 28 der Rückenlehne 14 bildet, die mit der Stirnfläche 32 des dritten Polsterkörpers 30 stufen- bzw. absatzlos die Rückenlehnenfläche 28 bildet, ergibt sich beim Aufklappen des integrierten Kindersitzes 54 in der in Fig. 4 gezeichneten aktiven Kindersitz-Position eine entsprechende Vorverlagerung des ersten Polsterkörpers 22 um die Drehachse 38 herum, so daß nun die Vorderfläche 42 des ersten Polsterkörpers 22 gemeinsam mit der Stirnfläche 32 des dritten Polsterkörpers 30 eine stufen- bzw. absatzlose Rückenlehnenfläche 28 der Rückenlehne 14 ausbildet. Die Vorverlagerung des ersten Polsterkörpers 22 um die Drahachse 38 herum wird hierbei durch das sogenannte Viergelenkgetriebe 72 im unteren Bereich 48 der Rückenlehne 14 bewirkt, wobei das besagte Viergelenkgetriebe 72 als wesentliche Elemente den Führungsschlitz 62 in der entsprechenden Längsführung 60, das im entsprechenden Führungsschlitz 62 geführte Führungsorgan 64 und die Drehachse 46 umfaßt, wobei der Abstand zwischen der Drehachse 46 und dem mindestens einen Führungsorgan 64 mittels des formstabilen Verbindungsorgans 66 konstant gehalten wird. Drehachse 46 und Führungsorgan 64 sind Teile des zweiten Polsterkörpers 24 bzw. Teile des rückwärtigen Polsterabschnitts 58 des zweiten Polsterkörpers 24.

Nachdem bei dieser Ausbildung der rückwärtige Polsterabschnitt 58 von der Sitzplatte 12 in der aufgeklappten Stellung des integrierten Kindersitzes 54 beabstandet ist, ist es zweckmäßig, wenn die Kopfstütze 16 mit ihrer Vorderfläche 74 mit der übrigen Rückenlehnenfläche 28 absatzlos fluchtet. Dadurch ergibt sich dann nämlich eine gute anatomische Anpassung des Sitzes 10 mit aufgeklapptem integriertem Kindersitz 54 an Kinder verschiedener Größe und Statur. In Fig. 4 sind die Konturen dreier unterschiedlich großer Kinder mit dünnen strichlierten Linien angedeutet.

Gleiche Einzelheiten sind in den Fig. 3 und 4 mit denselben Bezugsziffern bzw. mit den gleichen Bezugsziffern wie in den Fig. 1 und 2 bezeichnet, so daß es sich erübrigt in Verbindung mit Fig. 4 alle diese Einzelheiten noch einmal detailliert zu beschreiben.

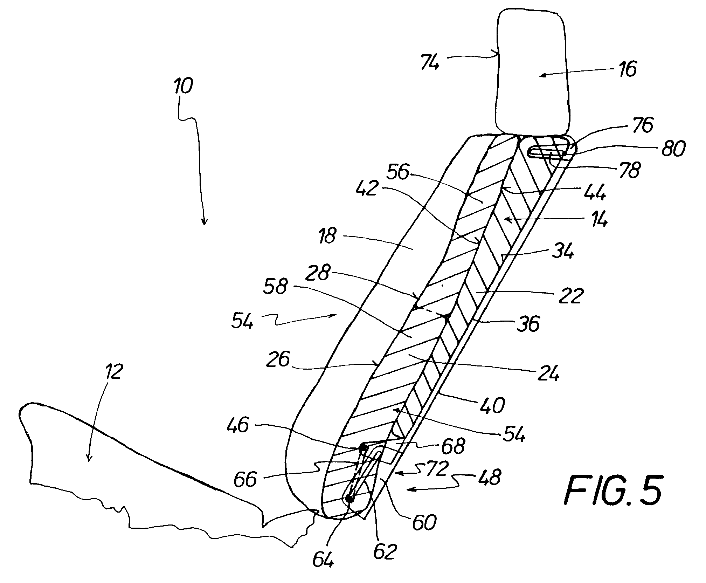

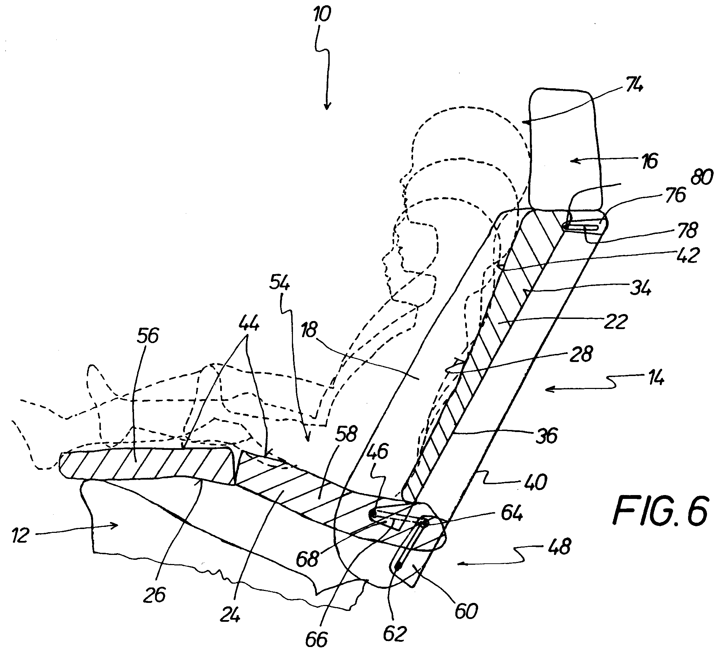

Die Figuren 5 und 6 zeigen eine den Figuren 3 und 4 im unteren Bereich 48 der Rückenlehne 14 ähnliche Ausbildung des Fahrgastsitzes 10, wobei sich die in den Figuren 5 und 6 dargestellte Ausbildung des Fahrgastsitzes 10 dadurch unterscheidet, daß hier kein dritter Polsterkörper 30 (sh. die Fig. 3 und 4) vorgesehen ist, sondern der erste Polsterkörper 22 und der zweite Polsterkörper 24 bis zur Kopfstütze 16 hinaufreichen. Damit auch bei einer solchen Ausbildung des Fahrgastsitzes 10 bei einer Aufklappung des zweiten Polsterkörpers 24 um die Drehachse 46 bzw. das Viergelenkgetriebe 72 die Vorderfläche 42 des ersten Polsterkörpers 22 mit der Vorderfläche 74 der Kopfstütze 16 stufen- bzw. absatzlos eine gemeinsame Rückenlehnenfläche 28 bildet (sh. Fig. 6) ist der Rückenlehnenträger 40 oberseitig, d.h. in der Nachbarschaft der Kopfstütze 16 mit mindestens einer - zweckmäßigerweise mit zwei seitlichen Linearführungen 76 versehen, von welchen jede einen Längsschlitz 78 aufweist, in dem ein zugehöriges Führungsorgan 80 linear beweglich geführt ist. Das entsprechende Führungsorgan 890 ist am ersten Polsterkörper 22 bzw. am formstabilen Element 36 vorgesehen, an dem der erste Polsterkörper 22 mit seiner Rückenfläche 34 festgelegt ist. In Fig. 5 ist der Fahrgastsitz 10 mit integriertem Kindersitz 54 in der inaktiven Kindersitz-Position dargestellt, während Fig. 6 den Fahrgastsitz 10 gemäß Fig. 5 in der aktiven aufgeklappten Stellung des integrierten Kindersitzes 54 zeigt, in welcher der erste Polsterkörper 22 in Folge der Umklappung des zweiten Polsterkörpers 24 im entgegengesetzten Uhrzeigersinn um die Drehachse 46 bzw. das Viergelenkgetriebe 72 vom Rückenlehnenträger 40 weg derartig vorverlagert ist, daß die Vorderfläche 42 des ersten Polsterkörpers 22 mit der Vorderfläche 74 der Kopfstütze 16 stufen- und absatzlos eine geeignete Rückenlehnenfläche 28 für unterschiedlich große Kinder bildet.

Gleiche Einzelheiten sind in den Figuren 5 und 6 mit denselben Bezugsziffern bezeichnet wie die entsprechenden Einzelheiten in den Figuren 3 und 4 bzw. 1 und 2, so daß es sich erübrigt in Verbindung mit den Figuren 5 und 6 alle diese Einzelheiten noch einmal detailliert zu beschreiben.

## Patentansprüche

1. Fahrgastsitz mit intergriertem Kindersitz (54), wobei eine Rückenlehne (14) des Fahrgastsitzes (10) einen Rückenlehnenträger (40) und ein Rückenlehnenpolster aufweist und das Rückenlehnenpolster zwei Seitenpolster (18) und ein zwischen den Seitenpolstern (18) befindliches Lehnenmittelpolster (20) umfaßt, das einen ersten, unteren und bei Gebrauch des Kindersitzes (54) das Rückenlehnenpolster für den Kindersitz (54) bildenden Polsterkörper (22) und einen zweiten, bei Nicht-Gebrauch des Kindersitzes (54) auf dem ersten Polsterkörper (22) zur Bildung der Rückenlehnenfläche (28) des Fahrgastsitzes (10) aufliegenden, und bei Gebrauch des Kindersitzes (54) um eine im unteren Bereich (48) der Rückenlehne (14) verlaufende Drehachse (46) von dem ersten Polsterkörper (22) nach vorne weg aufgeklappten, das Sitzpolster des Kindersitzes (54) bildenden Polsterkörper (24) aufweist, wobei der erste Polsterkörper (22) in seinem oberen Bereich am Rückenlehnenträger (40) beweglich gelagert und in seinem unteren Bereich mit dem zweiten Polsterkörper (24) für eine Verlagerung in seinem oberen Bereich beim Aufklappen des zweiten Polsterkörpers (24) zur mindestens annähernden, stufenlosen Herstellung der ursprünglichen Rückenlehnenfläche (28) verbunden ist, und die im unteren Bereich (48) der Rückenlehne (14) verlaufende Drehachse (46) des zweiten Polsterkörpers (24) am Rückenlehnenträger (40) vorgesehen ist,
**dadurch gekennzeichnet,**
daß der erste Polsterkörper (22) in seinem oberen Bereich um eine am Rückenlehnenträger (40) vorgesehene Drehachse (38) verschwenkbar ist, die in am Rückenlehnenträger (40) vorgesehenen Führungen (76) verschiebbar ist.

2. Fahrgastsitz nach Anspruch 1,
**dadurch gekennzeichnet,**
daß die im unteren Bereich (48) der Rückenlehne (14) verlaufende Drehachse (46) des zweiten Polsterkörpers (24) am ersten Polsterkörper (22) fixiert ist und ein über die Drehachse (46) zum Rückenlehnenträger (40) hin überstehendes Ende des zweiten Polsterkörpers (24) längs des Rückenlehnenträgers (40) in einer Längsführung (60) geführt ist.

3. Fahrgastsitz nach Anspruch 2,
**dadurch gekennzeichnet,**
daß die Längsführung (60) einen oder mehrere querverlaufende Führungsabschnitte (70) aufweist.

4. Fahrgastsitz nach einem der vorhergehenden Ansprüche,
**dadurch gekennzeichnet,**
daß die im unteren Bereich (48) der Rückenlehne (14) verlaufende Drehachse (46) des zweiten Polsterkörpers (24) sich in einem Abstand vom unteren Rand des Rückenlehnenträgers (40) befindet.

5. Fahrgastsitz nach Anspruch 4,
**dadurch gekennzeichnet,**
daß das vordere Ende (56) des zweiten Polsterkörpers (24) im aufgeklappten Zustand des zweiten Polsterkörpers (24) bei Gebrauch des Kindersitzes (54) nach unten klappbar ist.

6. Fahrgastsitz nach einem der vorhergehenden Ansprüche,
**dadurch gekennzeichnet,**
daß das Lehnenmittelpolster (20) zwischen den beiden Seitenpolstern (18) im Bereich des oberen Randes des Rückenlehnenträgers (40) einen dritten, mit dem Rückenlehnenträger (40) fest verbundenen Polsterkörper (30) aufweist, der mit dem ersten Polsterkörper (22) bei aufgeklapptem zweiten Polsterkörper (24) für den Gebrauch des Kindersitzes (54) einen stufenlosen Übergang bildet.

7. Fahrgastsitz nach einem der Ansprüche 1 bis 6,
**dadurch gekennzeichnet,**
daß die zwei Seitenpolster (18) starr mit dem ersten Polsterkörper (22) verbunden sind.

8. Fahrgastsitz nach einem der Ansprüche 1 bis 6,
**dadurch gekennzeichnet,**
daß die zwei Seitenpolster (18) starr mit dem Rückenlehnenträger (40) verbunden sind.

## Claims

1. A passenger seat with an integrated child's seat (54), wherein a backrest (14) of the passenger seat (10) has a backrest support (40) and a backrest squab, and the backrest squab comprises two side squabs (18) and a central backrest squab (20) situated between the side squabs (18), which central squab has a first lower squab body (22) that forms the backrest squab for the child's seat (54) when the child's seat (54) is in use, and a second squab body (24) bearing on the first squab body (22) for forming the backrest face (28) of the passenger seat (10) when the child's seat (54) is not in use, and which when the child's seat is in use, forms the seat pad of the child's seat (54) which is folded open towards the front away from the first squab body (22) round a pivot pin (46) extending in the lower zone (48) of the backrest (14), in which arrangement the first squab body (22) is mounted in its upper zone on the backrest support (40) for movement, and is connected in its lower zone to the second squab body (24) for displacement in its upper zone when the second squab body (24) is folded up, so as to produce at least approximately the continuous original face (28) of the backrest, and the pivot pin (46) of the second squab body (24) extending in the lower zone (48) of the backrest (14) is provided on the backrest support (40),
**characterized in that**
the first squab body (22) is pivotable in its upper zone round a pivot pin (38) provided on the backrest support (40), which pivot pin is displaceable in guides (76) provided on the backrest support (40).

2. A passenger seat according to claim 1,
**characterized in that**
the pivot pin (46) of the second squab body (24) extending in the lower zone (48) of the backrest (14) is secured on the first squab body (22), and that one end of the second squab body (24) projecting over the pivot pin (46) towards the backrest support (40) is carried along the backrest support (40) in a longitudinal guide (60).

3. A passenger seat according to claim 2,
characterized in that
the longitudinal guide (60) has one or more transversely extending guide sections (70).

4. A passenger seat according to one of the preceding claims,
characterized in that
the pivot pin (46) of the second squab body (24) extending in the lower zone (48) of the backrest (14) is situated at a distance from the bottom edge of the backrest support (40).

5. A passenger seat according to claim 4,
characterized in that
the front end (56) of the second squab body (24) can be folded down when the second squab body (24) is folded open and the child's seat (54) is in use.

6. A passenger seat according to one of the preceding claims,
characterized in that
the central backrest squab (20) between the two side squabs (18) has in the zone of the upper edge of the backrest support (40) a third squab body (30) rigidly connected to the backrest support (40), which squab body forms a continuous transition to the first squab body (22) when the second squab body (24) is folded open for the use of the child's seat (54).

7. A passenger seat according to one of claims 1 to 6,
characterized in that
the two side squabs (18) are rigidly connected to the first squab body (22).

8. A passenger seat according to one of claims 1 to 6,
characterized in that
the two side squabs (18) are rigidly connected to the backrest support (40).

## Revendications

1. Siège de passager à siège d'enfant intégré (54) dans lequel un dossier (14) dudit siège passager (10) comporte un support (14) et un coussin, ce dernier étant lui-même composé de deux coussins latéraux (18) et d'un coussin central (20) situé entre lesdits deux coussins latéraux (18), ledit coussin central présentant une première portion (22) inférieure formant le dossier du siège d'enfant (54) lors de l'utilisation de ce dernier et une deuxième portion (24), reposant sur la première portion (22) de manière à former le dossier (28) du siège de passager (10) lors de la non utilisation en tant que siège d'enfant (24), et formant le coussin d'assise du siège d'enfant (54) lors de l'utilisation du siège d'enfant (54), par dépliage vers l'avant à partir de la première portion (22) autour d'un axe de rotation (46) se trouvant dans la zone inférieure (48) du dossier (14), la première portion de coussin (22) étant au surplus mobile par rapport au support (40) du dossier dans sa zone supérieure, alors que sa partie inférieure est reliée à la deuxième portion de coussin (24) de telle sorte qu'elle puisse se déplacer au niveau de sa partie supérieure lors du dépliage de la deuxième portion de coussin (24) pour au moins approximativement reformer la planéité originelle du dossier (28), c'est à dire sans rupture, l'axe de rotation (46) de la seconde portion de coussin (24), situé dans la zone inférieure (48) du dossier (14), étant localisé sur le support de dossier (14),
caractérisé en ce que la première portion de coussin (22) pivote dans sa partie supérieure autour d'un axe de rotation (38) situé sur le support du dossier (40), ledit axe de rotation étant coulissable dans des glissières (76) pratiquées dans le support du dossier (40).

2. Siège de passager selon la revendication 1, caractérisé en ce que l'axe de rotation (46) de la deuxième portion de coussin (24), situé à la partie inférieure (48) du dossier (14), est fixé à la première portion de coussin (22), et en ce qu'une extrémité de la deuxième portion de coussin se déplace au-dessus de l'axe de rotation (46) dans le support de dossier (40), le long de ce dernier, dans une glissière (60).

3. Siège de passager selon la revendication 2, caractérisé en ce que ladite glissière (60) comporte au moins une portion transversale.

4. Siège de passager selon l'une quelconque des revendications précédentes, caractérisé en ce que l'axe de rotation (46), situé dans la partie inférieure (48) du dossier (14), se situe à distance de la bordure inférieure du support de dossier (40).

5. Siège de passager selon la revendication 4, caractérisé en ce que l'extrémité avant (56) de la deuxième portion de coussin (24), lorsqu'elle est en position dépliée pour utilisation en tant que siège d'enfant (54), est déplaçable vers l'arrière.

6. Siège de passager selon l'une quelconque des revendications précédentes, caractérisé en ce que le coussin central du dossier (20), situé entre les deux coussins latéraux (18), comprend une troisième portion de coussin (30) solidarisée au support de dossier (40) dans la zone de la bordure supérieure dudit support de dossier (40), ladite troisième portion formant avec la première portion de coussin (22) une transition sans rupture lors de l'utilisation en siège d'enfant (54) avec la seconde portion de coussin (24) dépliée.

7. Siège de passager selon l'une quelconque des revendications 1 à 6, caractérisé en ce que les deux coussins latéraux (18) sont solidarisés à la première portion de coussin (22).

8. Siège de passager selon l'une quelconque des revendications 1 à 6, caractérisé en ce que les deux coussins latéraux (18) sont solidarisés au le support de dossier (40).
